# EUROPÄISCHE PATENTSCHRIFT

(11) **EP 2 242 861 B1**
(45) Veröffentlichungstag und Bekanntmachung des Hinweises auf die Patenterteilung: **12.08.2015**
(21) Anmeldenummer: 09710081.2
(22) Anmeldetag: 29.01.2009
(51) Int. Cl.: C21B 5/00, C21B 5/06, C21B 13/00, C21B 13/14

(54) **VERFAHREN ZUM ERSCHMELZEN VON ROHEISEN UNTER RÜCKFÜHRUNG VON GICHTGAS UNTER ZUSATZ VON KOHLENWASSERSTOFFEN**
METHOD FOR MELTING RAW IRON WHILE RECIRCULATING BLAST FURNACE GAS BY ADDING HYDROCARBONS
PROCÉDÉ POUR FONDRE DE LA FONTE AVEC RECYCLAGE DU GAZ DE GUEULARD EN Y AJOUTANT DES HYDROCARBURES

(30) Priorität: 15.02.2008 AT 2482008
(43) Veröffentlichungstag der Anmeldung: 27.10.2010
(73) Patentinhaber: Primetals Technologies Austria GmbH, 4031 Linz (AT)
(72) Erfinder: MILLNER, Robert, A-3382 Loosdorf (AT); WIEDER, Kurt, A-4311 Schwertberg (AT); WURM, Johann, A-4283 Bad Zell (AT)
(74) Vertreter: Metals@Linz
(86) Internationale Anmeldenummer: PCT/EP2009/000556
(87) Internationale Veröffentlichungsnummer: WO 2009/100819

(56) Entgegenhaltungen:
- DE-A1- 1 939 354
- DE-A1- 4 041 689
- DE-A1-102004 036 767
- US-A- 3 909 446

## Beschreibung

Die Erfindung betrifft ein Verfahren zum Erschmelzen von Roheisen gemäß dem Oberbegriff von Anspruch 1.

Gemäß dem Stand der Technik sind verschiedene Verfahren zum Erschmelzen von Roheisen bekannt. In der GB 883998 A wird etwa beschrieben, bei Hochöfen verschiedene kohlenstoffhältige Gase wie Erdgas oder Koksofengas über die Windformen oder in der Bosh-Ebene einzublasen, um auf diese Art Koks einzusparen und die Wirtschaftlichkeit der Anlage zu erhöhen. Eine Eindüsung von Gichtgas aus einem konventionellen, mit Heißwind betriebenen Hochofen ist aufgrund des hohen Gehalts an Kohlendioxid und Stickstoff, sowie des niedrigen Gehalts an Wasserstoff nicht wirtschaftlich.

In der DE 19 39 354 A wird die Reformierung von Gichtgas aus einem Hochofen mit Kohlenwasserstoff-Brennstoff in einem unterfeuerten, externen Reaktionssystem, und dessen Rückführung in den Hochofen beschrieben. Nachteilig dabei ist der zusätzlich erforderlich Energieaufwand für die Unterfeuerung des Erhitzers, sowie der sehr hohe Aufwand für den Hochtemperaturwärmetauscher. Des Weiteren ergeben sich während der Aufheizung Nachteile aufgrund der so genannten "Metal Dusting Korrosion" durch Kohlenmonoxid und Wasserstoff im Reduktionsgas.

In der DE 2 261 766 wird die Rezirkulation von Gichtgas eines mit Sauerstoff anstelle von Heißwind betriebenen Hochofens beschrieben. Nach der Wäsche des Gichtgases wird das Kohlendioxid entfernt, und über Formen an der Rast oder des Gestells in den Hochofen eingebracht.

Des Weiteren ist der Betrieb eines Hochofens mit Sauerstoff und Rückführung des Gichtgases, sowie die Verwendung einer CO₂-Entfernungsanlage auch in der DE 3702875 C1 beschrieben.

In der WO 2004/052510 A3 wird der Betrieb eines Hochofens mit Heißwind und Rückführung von Gichtgas, sowie Entfernung von Kohlendioxid und Stickstoff beschrieben. Bei diesen Ausführungsformen bestehen jedoch wesentliche Nachteile in den beträchtlichen Investitions- und Betriebsaufwänden für die Entfernung von Kohlendioxid und des Stickstoffs aus dem Gichtgas, sowie in der notwendigen Aufheizung des Reduktionsgases, wobei sich wiederum Probleme mit Metal Dusting Korrosion ergeben. Des Weiteren muss das Restgas aus der CO₂-Entfernung aufgrund des geringen Heizwerts einer Verwertung bzw. Nachbehandlung zugeführt werden. Dabei wird weiters das Kohlendioxid im Hochofengichtgas ausgeschleust, was zu nachteiligen CO₂-Emissionen führt weil es nicht wieder zu Reduktionsgas reformiert wird. Somit treten zusätzliche Verluste an Reduktanten im Restgas auf.

Der US 3,909,446 ist ein Verfahren zur Herstellung eines Reduktionsgases zu entnehmen, wobei Koksofengas und Gichtgas separat in zwei Öfen erwärmt, nachfolgend in einem Reformerofen zusammengeführt und reformiert werden. Nachteilig ist dabei, dass eine Mischung der vorerwärmten Gase erst im Reformerofen erfolgt, sodass Bereiche unterschiedlicher Temperaturen nicht ausgeschlossen werden können.

DE 40 41 689 A1 offenbart ein Verfahren, zur Mischung von Gichtgas mit Kohlenwasserstoffen. Die Gasmischung wird zunächst mit heißer Luft vermischt, dann tlw. verbrannt bzw. erwärmt, anschließend in eine Reduktionszone eingeleitet und gelangt in Kontakt mit DRI, wobei es einer Reduktion unter Bildung von CO und H₂, unterzogen wird.

Dieselben Nachteile ergeben sich auch bei einem Verfahren gemäß der DE 10 2004 036 767 A1, die als nächstkommender Stand der Technik aufgefasst wird. In diesem Dokument wird ein Verfahren zur Roheisenerzeugung in einem mit Sauerstoff betriebenen Hochofen und rückgeführtem Gichtgas unter Zusatz von Kohlenwasserstoffen beschrieben, wobei aber wiederum die vorherige Entfernung von Kohlendioxid erforderlich ist.

Es ist daher das Ziel der Erfindung, mithilfe eines verbesserten Verfahrens zum Erschmelzen von Roheisen diese Nachteile zu vermeiden, und insbesondere ein Verfahren bereit zu stellen, bei dem keine aufwändige Entfernung von Kohlendioxid und/oder Stickstoff erforderlich ist. Dadurch soll anfallendes Restgas durch die CO₂-Entfernung vermieden, und die Gesamtkosten der Anlage hinsichtlich Investitions- und Betriebsaufwand verringert werden.

Diese Ziele werden durch die Maßnahmen von Anspruch 1 verwirklicht. Anspruch 1 bezieht sich auf ein Verfahren zum Erschmelzen von Roheisen in einem mit Sauerstoff betriebenen Hochofen oder einer Schmelzreduktionsanlage, mit einem Reduktionsbereich, wobei das aus dem Reduktionsbereich abgeführte, gereinigte Rohgas unter Zusatz von Kohlenwasserstoffen in den Reduktionsbereich rückgeführt wird. Erfindungsgemäß ist vorgesehen, dass das aus dem Reduktionsbereich abgeführte, gereinigte Rohgas zunächst in einem Verdichter verdichtet und mit Kohlenwasserstoffen vermischt wird. Anschließend wird dieses Gasgemisch mit Reduktionsgas, das eine Temperatur über 1000°C aufweist und durch partielle Oxidation von Kohlenwasserstoffen mittels Sauerstoffgas, das einen Sauerstoffgehalt über 90 vol% aufweist, erzeugt wird, in einer ausreichenden Mischstrecke oder einer Mischkammer zur Einstellung einer gleichmäßigen Temperaturverteilung vermengt. Bei diesem Schritt wird die erforderliche Temperatur des Rezirkulationsgases für den nachfolgenden Auto-Reformierungsprozess erreicht. Die im gereinigten Rohgas enthaltenen Kohlenwasserstoffe werden in weiterer Folge mit den ebenfalls enthaltenen Gaskomponenten Kohlendioxid und Wasser reformiert, und anschließend in den Reduktionsbereich rückgeführt. Dabei wird durch den Reformierungsprozess das Rezirkulationsgas auf Temperaturen von etwa 800°C weiter abgekühlt.

Der Reduktionsbereich liegt im Falle eines Hochofens innerhalb des Hochofens, und im Falle einer Schmelzreduktionsanlage im Einschmelzvergaser sowie im separaten Reduktionsschacht.

Die Ansprüche 2 bis 7 sehen vorteilhafte Ausführungsformen der Erfindung dar. So kann etwa der Auto-Reformierungsprozess mithilfe eines in einem mit entsprechendem Katalysator gefüllten Reformers beschleunigt werden. Eine besonders günstige Rückführung des Rezirkulationsgases in die Reaktionskammer eines Hochofens kann etwa über die Windformen, in der Ebene über den Windformen, oder in den Schacht des Hochofens erfolgen. Dabei kann bei Rückführung des Rezirkulationsgases über die Windformen auch eine Feinkohleeindüsung vorgesehen sein. Des Weiteren kann es sich bei den dem gereinigten Rohgas zugeführten Kohlenwasserstoffen um Kohlenwasserstoffe der allgemeinen Formel CₙHₘ, oder einem Gemisch dieser Kohlenwasserstoffe, handeln. Hinsichtlich des Rohgases kann eine Wärmerückgewinnung vorgesehen sein, oder eine Trockenentstaubung zur Reinigung des Rohgases.

Die Erfindung wird im Folgenden anhand verschiedener Ausführungsformen mithilfe der beiliegenden Figuren näher erläutert. Es zeigen dabei die
Fig. 1 ein Schaubild für die Anwendung des erfindungsgemäßen Verfahrens zum Erschmelzen von Roheisen in einem Hochofen, und
Fig. 2 ein Schaubild für die Anwendung des erfindungsgemäßen Verfahrens zum Erschmelzen von Roheisen in einer Schmelzreduktionsanlage.

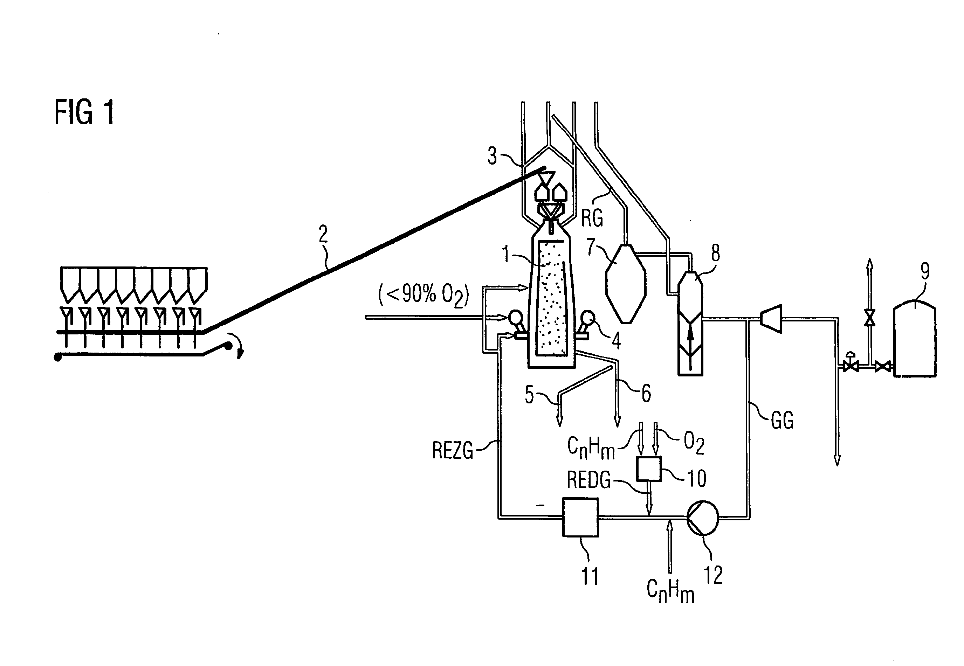

Anhand der Fig. 1 wird eine erste Ausführungsform des erfindungsgemäßen Verfahrens beschrieben. Die Fig. 1 zeigt einen Hochofen 1, in dem Eisen durch Reduktion von Eisenoxid gewonnen wird. Hierzu werden die Rohstoffe, insbesondere der das Eisenoxid enthaltende Möller, Zuschlagstoffe sowie Koks, über einen Schrägaufzug 2 oder Steilbandförderer 2 zum Gichtverschluss 3 des Hochofens 1 befördert, und in das Innere des Hochofens 1 eingebracht. Der Hochofen 1 kann als metallurgischer Reaktor gesehen werden, in dem im Gegenstrom die Möllersäule etwa mit eingeblasenem Sauerstoff reagiert, der über die Windformen 4 eingebracht wird. Durch Vergasung des Kohlenstoffs aus dem Koks entstehen die für die Reaktion nötige Wärme und Kohlenmonoxid, das die Möllersäule durchströmt und das Eisenoxid reduziert. Auf dem Weg vom Gichtverschluss 3 bis zum Fuß des Hochofens 1 vollziehen sich dabei unterschiedliche physikalisch-chemische Prozesse, sodass in der Regel auch unterschiedliche Bereiche innerhalb des Hochofens 1 unterschieden werden, etwa Schmelzzone, Kohlungszone, Reduktionszone, usw. Im Folgenden werden diese Bereiche zusammengefasst, und für dieses Ausführungsbeispiel allgemein als Reduktionsbereich bezeichnet. Am Fuß des Hochofens 1 können in weiterer Folge eine Roheisenfraktion 5 und eine Schlackenfraktion 6 gewonnen werden, die periodisch abgestochen werden.

Das im Reduktionsbereich gebildete Rohgas RG, das hier auch als Gichtgas bezeichnet wird, wird am oberen Schachtende des Hochofens 1 abgezogen, in einem Entstauber 7 trocken entstaubt, und in einem Gichtgaswäscher 8 gereinigt. Das gereinigte Rohgas wird in diesem Fall daher auch als gereinigtes Gichtgas GG bezeichnet. Gichtgas enthält neben Kohlenstoffmonoxid noch Anteile an Kohlendioxid, sowie Wasserstoff und Wasserdampf, sowie gegebenenfalls geringe Mengen an Stickstoff. Das gereinigte Gichtgas GG wird in der Regel teilweise in den Hochofen 1 rückgeführt und als Reduktionsmittel genutzt. Weitere Anteile des gereinigten Gichtgases GG können in einem Kraftwerk zur Stromerzeugung 9, der Beheizung von Glüh- und Wärmöfen, oder als Unterfeuerungs-Gas der Koksöfen verwendet werden.

In der Fig. 1 sind des Weiteren die zur Durchführung des erfindungsgemäßen Verfahrens notwendige Brennkammer 10 und der Reformer 11 ersichtlich. In der Brennkammer 10 werden Kohlenwasserstoffe, z.B. Erdgas, mit Sauerstoffgas, welches einen Sauerstoffanteil von über 90 vol% enthält, unterstöchiometrisch oxidiert. Ein Grossteil des CH₄ (und weiterer höherer Kohlenwasserstoffe) wird dabei partial oxidiert, nur ein kleiner Teil wird verbrannt, und ein sehr kleiner Anteil reagiert überhaupt nicht. Die chemischen Reaktionen können wie folgt zusammengefasst werden:

CH₄ + 1/2 O₂ → CO + 2 H₂

CH₄ + 2 O₂ → CO₂ + 2 H₂O

CH₄ → CH₄

Nach der Brennkammer 10 entsteht somit ein Reduktionsgas REDG bestehend hauptsächlich aus H₂ und CO mit einer Temperatur von ca. 1500°C.

Das gereinigte Gichtgas GG wird zunächst in einem Verdichter 12 verdichtet, mit Kohlenwasserstoffen der allgemeinen Formel CₙHₘ, oder einem Gemisch davon, etwa Erdgas, vermengt, und anschließend mit dem Reduktionsgas REDG aus der Brennkammer 10 gleichmäßig vermischt. Das so gebildete Gas wird im Folgenden als Rezirkulationsgas REZG bezeichnet. Hierzu ist eine ausreichende Mischstrecke oder Mischkammer zur Einstellung einer gleichmäßigen Temperaturverteilung erforderlich. Durch diese Vermischung wird die anfängliche Temperatur des Reduktionsgases REDG gesenkt, und Temperaturen des Rezirkulationsgases REZG von etwa 1000°C erzielt. Die Temperatur des Rezirkulationsgases REZG soll jedenfalls über 800°C betragen, um Kohlenstoffabscheidung bei ungünstigen Boudouard-Gleichgewichten zu verhindern.

Dieses Rezirkulationsgas REZG wird anschließend durch einen Reformer 11 geführt, bei dem es sich um einen mit Katalysator gefüllten Behälter oder Rohre handelt, wobei die Reformierung der kohlenwasserstoffhältigen Gase erfolgt, und die Qualität des Gases durch Erhöhung des CO- und H₂-Gehaltes relativ zum CO₂- und H₂O-Gehalt wesentlich verbessert wird. Die im Reformer 11 stattfindenden Reaktionen können wie folgt zusammengefasst werden:

CₙHₘ + n CO₂ → 2n CO + m/2 H₂

CₙHₘ + n H₂O → n CO + (m/2+n) H₂

Durch den Reformierungsprozess wird das Rezirkulationsgas REZG weiter auf Temperaturen von etwa 800°C abgekühlt. Das Rezirkulationsgas REZG wird anschließend entweder über die Windformen 4, in der Ebene über den Windformen 4, oder in den Schacht des Hochofens 1 eingebracht.

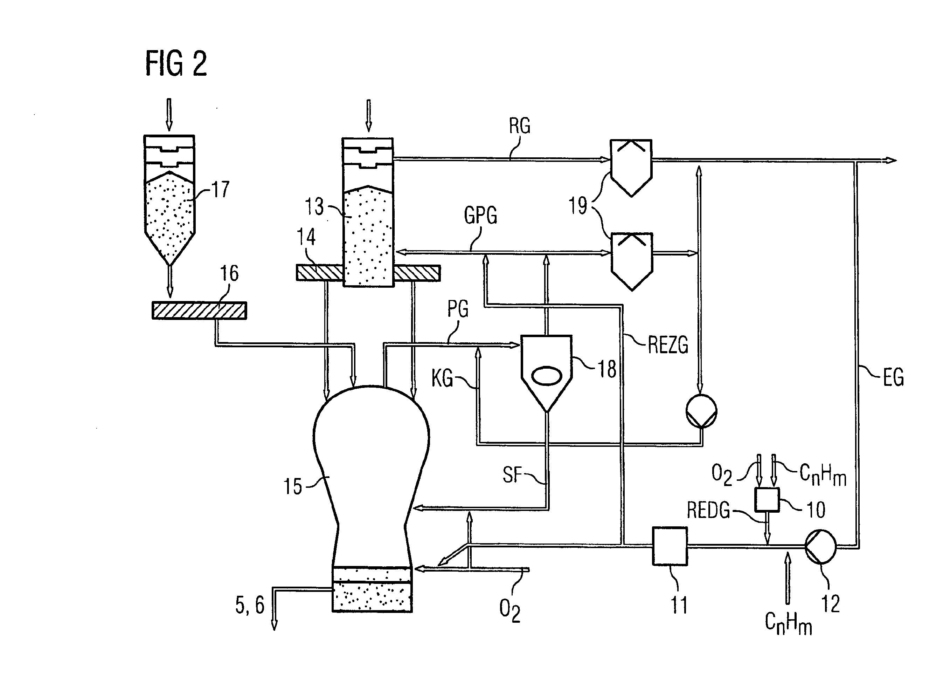

In der Fig. 2 ist ein weiteres Ausführungsbeispiel des erfindungsgemäßen Verfahrens dargestellt, und zwar im Rahmen einer Schmelzreduktionsanlage. Anlagen dieser Art werden zum Herstellen von flüssigem Roheisen verwendet, etwa im Rahmen eines COREX®-Verfahrens. Hierbei wird im Gegensatz zum Hochofenprozess kein Hochofenkoks benötigt. Wenngleich das erfindungsgemäße Verfahren auch auf andere Herstellungsprozesse anwendbar ist, etwa das FINEX®-Verfahren, wird im Folgenden das erfindungsgemäße Verfahren anhand des in der Fig. 2 skizzierten COREX®-Verfahrens erläutert.

Das gezeigte Verfahren ist ein zweistufiges Schmelzreduktionsverfahren ("Smelting-reduction"), bei dem in einem ersten Schritt die Erze des Roheisens zu Eisenschwamm reduziert werden, und in einem zweiten Schritt die Endreduktion, das Aufschmelzen und die Aufkohlung zu Roheisen erfolgt. Die für den Schmelzvorgang nötige Energie wird dabei durch die Vergasung von Kohle bereitgestellt. Dabei entstehen große Mengen Kohlenmonoxid und Wasserstoff als Rohgas, das als Reduktionsgas genutzt werden kann.

Wie aus der Fig. 2 ersichtlich ist, werden zunächst Stückerze, Sinter, Pellets, oder deren Mischungen, in einen Reduktionsschacht 13 eingebracht, und im Gegenstrom mit dem reduzierenden Prozessgas GPG reduziert. Nach Durchlaufen des Reduktionsschachtes 13 wird das Endprodukt dieser ersten Stufe über Austragsschnecken 14 in den darunter angeordneten Einschmelzvergaser 15 gefördert. Das im Reduktionsschacht 13 entstehende Rohgas RG wird aus dem Reduktionsschacht 13 abgeführt, und in einem Wäscher 19 gereinigt. Ein Teilstrom des Reduktionsgases wird nach Reinigung und Kühlung als Kühlgas KG für das aus dem Einschmelzvergaser 15 abgezogene Prozessgas PG verwendet werden. Das als Regelgas anfallende Reduktionsgas wird nach Kühlung und Reinigung mit dem Rohgas RG vermischt.

Im Einschmelzvergaser 15 laufen neben der Restreduktion und dem Einschmelzen des Eisenschwammes die notwendigen metallurgischen Metall- und Schlackenreaktionen ab. Aus dem Einschmelzvergaser 15 können in weiterer Folge wie beim Hochofen eine Roheisenfraktion 5 und eine Schlackenfraktion 6 gewonnen werden, die periodisch abgestochen werden.

In den Einschmelzvergaser 15 wird Kohle eingebracht, die über eine Kohle-Förderschnecke 16 aus einem Kohle-Vorratsschacht 17 gefördert wird. Nach dem Entwässern und der Entgasung der Kohle bildet sich im Einschmelzvergaser 15 zunächst ein Festbett aus Schwelkoks, das in weiterer Folge mit Sauerstoff vergast wird. Das entstehende heiße Prozessgas PG weist Temperaturen von etwa 1.000°C auf, besteht vorwiegend aus CO und H₂, weist somit reduzierende Wirkung auf, und ist mit Feinstaub beladen. Dieses Prozessgas PG wird durch Vermengung mit dem Kühlgas KG gekühlt, in einem Zyklon 18, etwa ein Heißzyklon, entstaubt, und schließlich dem Reduktionsschacht 13 als gereinigtes Prozessgas GPG zugeführt. Überschüssiges Gas wird in einem weiteren Wäscher 19 gereinigt. Ein Teilstrom des Reduktionsgases wird als Kühlgas KG verwendet. Die abgeschiedene Staubfraktion SF aus dem Zyklon 18 wird wieder in den Einschmelzvergaser 15 eingebracht, und stofflich genutzt bzw. mit Sauerstoff vergast.

In der Fig. 2 sind des Weiteren wieder die zur Durchführung des erfindungsgemäßen Verfahrens notwendige Brennkammer 10 und der Reformer 11 ersichtlich. In der Brennkammer 10 werden Kohlenwasserstoffe, z.B. Erdgas, mit Sauerstoffgas, welches einen Sauerstoffanteil von über 90 vol% enthält, unterstöchiometrisch oxidiert. Die chemischen Reaktionen laufen wiederum wie oben ausgeführt ab. Nach der Brennkammer 10 entsteht das Reduktionsgas REDG, bestehend hauptsächlich aus H₂ und CO mit einer Temperatur von ca. 1500°C.

Das gereinigte Rohgas, das in diesem Fall als Exportgas EG bezeichnet wird, wird zunächst in einem Verdichter 12 verdichtet, mit Kohlenwasserstoffen der allgemeinen Formel CₙHₘ, oder einem Gemisch davon, etwa Erdgas, vermengt, und anschließend mit dem Reduktionsgas REDG aus der Brennkammer 10 gleichmäßig vermischt. Das so gebildete Gas wird im Folgenden als Rezirkulationsgas REZG bezeichnet. Hierzu ist, wie ebenfalls bereits ausgeführt wurde, eine ausreichende Mischstrecke oder Mischkammer zur Einstellung einer gleichmäßigen Temperaturverteilung erforderlich. Durch diese Vermischung wird die anfängliche Temperatur des Reduktionsgases REDG gesenkt, und Temperaturen des Rezirkulationsgases REZG von etwa 1000°C erzielt. Die Temperatur des Rezirkulationsgases REZG soll jedenfalls über 800°C betragen, um Kohlenstoffabscheidung bei ungünstigen Boudouard-Gleichgewichten zu verhindern.

Dieses Rezirkulationsgas REZG wird anschließend durch einen Reformer 11 geführt, bei dem es sich um einen mit Katalysator gefüllten Behälter oder Rohre handelt, wobei die Reformierung der kohlenwasserstoffhältigen Gase erfolgt, und die Qualität des Gases durch Erhöhung des CO- und H₂-Gehaltes relativ zum CO₂- und H₂O-Gehalt wesentlich verbessert wird. Die im Reformer 11 stattfindenden Reaktionen laufen wiederum wie im oben beschriebenen Ausführungsbeispiel ab.

Durch den Reformierungsprozess wird das Rezirkulationsgas REZG weiter auf Temperaturen von etwa 800°C abgekühlt. Das Rezirkulationsgas REZG wird anschließend dem grob gereinigten Prozessgas GPG und dem Reduktionsschacht 13 zugeführt, bzw. über Sauerstoffdüsen in den Einschmelzvergaser 15 eingebracht.

Durch diese Rückführung und Reformierung mit höheren Kohlenwasserstoffen ergeben sich mehrere Vorteile gegenüber dem Stand der Technik. Da keine aufwändige CO₂- und/oder N₂-Entfernung erforderlich ist, können Investitionskosten gegenüber anderen Verfahren eingespart, und anfallendes Restgas durch die CO₂-Entfernung, das ansonsten einer Verwertung oder Nachbehandlung zugeführt werden müsste, vermieden werden. Allgemein ergeben sich geringere CO₂-Emissionen, da das CO₂ aus dem Gichtgas mit höheren Kohlenwasserstoffen (z.B. CH₄, C₂H₆, C₃H₈, C₄H₁₀, etc.) reformiert und wieder zur Reduktion verwendet wird. Des Weiteren kann der Wirkungsgrad bei der Erzeugung der erforderlichen Wärme für die Reformierung und der Eindüsung in den Hochofen erhöht werden, da keine Brenngase für die Unterfeuerung des Reformers 11 notwendig sind.

Des Weiteren kann Metal Dusting Korrosion durch CO-hältiges Reduktionsgas während Aufheizung, Reformierung und Transport reduziert werden, da die Brennkammer 10 und die entsprechenden Rohrleitungen zum Hochofen ausgemauert sind, und die Entfernungen sehr kurz gehalten werden können.

Ein weiterer Vorteil besteht in der Kühlung der Raceway durch gezielte Absenkung der Flammentemperatur aufgrund der endothermen Reaktion des Kokses mit den in sehr geringen Mengen noch vorhandenen Anteilen an H₂O, CO₂ und CH₄:

a. C + H₂O → CO + H₂ ΔH₂₉₈ = +132 kJ/mol

b. C + CO₂ → 2 CO ΔH₂₉₈ = +173 kJ/mol

c. CH₄ → 2 H₂ + C ΔH₂₉₈ = +74 kJ/mol

Da durch die geringen Konzentrationen jedoch keine zu starke Abkühlung entsteht, kann eine wesentlich größere Menge als bei einer reinen Erdgas- oder Öleindüsung in den Hochofen 1 eingebracht werden. Des Weiteren bietet sich die Möglichkeit der Einsparung von Kohle und Kohlebriketts als Reduktionsmittel durch Rückführung von Reduktanten (CO, H₂) aus dem Rezirkulationsgas REZG und Reformierung mit kohlenstoffhältigen Gasen. Somit ermöglicht das erfindungsgemäße Verfahren eine deutliche Senkung der Betriebskosten der Gesamtanlage.

## Patentansprüche

1. Verfahren zum Erschmelzen von Roheisen in einem mit Sauerstoff betriebenen Hochofen (1) oder einer Schmelzreduktionsanlage, mit einem Reduktionsbereich, wobei das aus dem Reduktionsbereich abgeführte, gereinigte Rohgas (GG, EG) unter Zusatz von Kohlenwasserstoffen in den Reduktionsbereich rückgeführt wird, **dadurch gekennzeichnet, dass** das gereinigte Rohgas (GG, EG) zunächst in einem Verdichter verdichtet, mit Kohlenwasserstoffen vermischt und anschließend mit Reduktionsgas (REDG), das eine Temperatur über 1000°C aufweist und das durch partielle Oxidation von Kohlenwasserstoffen mittels Sauerstoffgas, das einen Sauerstoffgehalt über 90vol% aufweist, erzeugt wird, zur Bildung eines Rezirkulationsgases (REZG) mit einer Temperatur über 800°C, in einer ausreichenden Mischstrecke oder einer Mischkammer zur Einstellung einer gleichmäßigen Temperaturverteilung vermengt wird, und das Rezirkulationsgas (REZG) nach einem Auto-Reformierungsprozess in den Reduktionsbereich rückgeführt wird.

2. Verfahren nach Anspruch 1, **dadurch gekennzeichnet, dass** der Auto-Reformierungsprozess in einem mit entsprechendem Katalysator gefüllten Reformer (11) erfolgt.

3. Verfahren nach Anspruch 1 oder 2, **dadurch gekennzeichnet, dass** das Rezirkulationsgas (REZG) zur Rückführung in den Reduktionsbereich eines Hochofens (1) über die Windformen (4), in der Ebene über den Windformen (4), oder in den Schacht des Hochofens (1) eingebracht wird.

4. Verfahren nach Anspruch 3, **dadurch gekennzeichnet, dass** die Rückführung des Rezirkulationsgases (REZG) über die Windformen (4) mit Feinkohleeindüsung erfolgt.

5. Verfahren nach einem der Ansprüche 1 bis 4, **dadurch gekennzeichnet, dass** es sich bei den dem gereinigten Rohgas (GG, EG) zugeführten Kohlenwasserstoffen um Kohlenwasserstoffe der allgemeinen Formel CₙHₘ, oder einem Gemisch dieser Kohlenwasserstoffe, handelt.

6. Verfahren nach einem der Ansprüche 1 bis 5, **dadurch gekennzeichnet, dass** eine Wärmerückgewinnung aus dem Rohgas (RG) erfolgt.

7. Verfahren nach einem der Ansprüche 1 bis 6, **dadurch gekennzeichnet, dass** zur Reinigung des Rohgases (RG) eine Trockenentstaubung des Rohgases (RG) erfolgt.

## Claims

1. Method for melting raw iron in a blast furnace (1) operated with oxygen or a smelting reduction system, having a reduction area, wherein the cleaned raw gas (GG, EG) discharged from the reduction area is recirculated into the reduction area by adding hydrocarbons, **characterised in that** the cleaned raw gas (GG, EG) is firstly compressed in a compressor, mixed with hydrocarbons and then with reduction gas (REDG), which has a temperature above 1000°C, and which is generated by partial oxidation of hydrocarbons using oxygenated gas, which has an oxygen content of 90 vol% , in order to form a recirculation gas (REZG) with a temperature above 800°C, in an adequate mixing section or a mixing chamber in order to set a uniform temperature distribution, and the recirculation gas (REZG) is recirculated into the reduction area following an automatic reformation process.

2. Method according to claim 1, **characterised in that** the automatic reformation process takes place in a reformer (11) filled with a corresponding catalyst.

3. Method according to claim 1 or 2, **characterised in that** the recirculation gas (REZG) for recirculation into the reduction area of a blast furnace (1) via the tuyeres (4) is introduced in the plane via the tuyeres (4) or into the shaft of the blast furnace (1).

4. Method according to claim 3, **characterised in that** the recirculation of the recirculation gas (REZG) takes place via the tuyeres (4) with coal fines injection.

5. Method according to one of claims 1 to 4, **characterised in that** the hydrocarbons fed to the cleaned raw gas (GG, EG) are hydrocarbons of the general formula *CₙHₘ* or a mixture of these hydrocarbons.

6. Method according to one of claims 1 to 5, **characterised in that** a heat recovery takes place from the raw gas (RG).

7. Method according to one of claims 1 to 6, **characterised in that** a dry dust collection system of the raw gas (RG) takes place in order to clean the raw gas (RG).

## Revendications

1. Procédé de fusion de fonte dans un haut fourneau (1) fonctionnant à l'oxygène ou dans une installation de réduction en fusion comprenant une zone de réduction, où le gaz brut purifié (GG, EG), évacué de la zone de réduction, est recyclé dans la zone de réduction en ajoutant des hydrocarbures, **caractérisé en ce que** le gaz brut purifié (GG, EG) est d'abord comprimé dans un compresseur, mélangé avec des hydrocarbures et, ensuite, produit avec du gaz de réduction (REDG) qui présente une température supérieure à 1000°C et qui, par oxydation partielle des hydrocarbures avec de l'oxygène gazeux qui présente une teneur en oxygène supérieure à 90 % en volume, est mélangé, pour la formation d'un gaz de recirculation (REZG) ayant une température supérieure à 800°C, dans un tronçon de mélange suffisant ou dans une chambre de mélange pour parvenir au réglage d'une répartition de température uniforme, et le gaz de recirculation (REZG) est recyclé dans la zone de réduction après un processus d'auto-reformage.

2. Procédé selon la revendication 1, **caractérisé en ce que** le processus d'auto-reformage se produit dans un reformeur (11) rempli d'un catalyseur correspondant.

3. Procédé selon la revendication 1 ou 2, **caractérisé en ce que** le gaz de recirculation (REDG), pour le recyclage dans la zone de réduction d'un haut fourneau (1), est introduit, par les tuyères à vent (4), dans le plan situé au-dessus des tuyères à vent (4) ou dans la cuve du haut fourneau (1).

4. Procédé selon la revendication 3, **caractérisé en ce que** le recyclage du gaz de recirculation (REDG), par les tuyères à vent (4), se produit en injectant des fines de charbon.

5. Procédé selon l'une quelconque des revendications 1 à 4, **caractérisé en ce qu'**il s'agit, concernant les hydrocarbures fournis au gaz brut purifié (GG, EG), d'hydrocarbures de la formule générale CₙHₘ ou d'un mélange de ces hydrocarbures.

6. Procédé selon l'une quelconque des revendications 1 à 5, **caractérisé en ce qu'**il se produit une récupération de la chaleur à partir du gaz brut (RG).

7. Procédé selon l'une quelconque des revendications 1 à 6, **caractérisé en ce qu'**il se produit un dépoussiérage à sec du gaz brut (RG) pour la purification du gaz brut (RG).
